## Europäisches Patentamt
## European Patent Office
## Office européen des brevets

(19)

(11) Veröffentlichungsnummer: **0 038 489**
**B1**

(12)

# EUROPÄISCHE PATENTSCHRIFT

(45) Veröffentlichungstag der Patentschrift:
**10.10.84**

(21) Anmeldenummer: **81102734.1**

(22) Anmeldetag: **10.04.81**

(51) Int. Cl.³: **A 23 K 1/00,** C 02 F 3/12,
C 02 F 11/00, C 12 N 1/00,
A 23 J 1/00

(54) Verfahren zur Gewinnung von proteinhaltigem Tierfutter.

(30) Priorität: **23.04.80 DE 3015515**

(43) Veröffentlichungstag der Anmeldung:
**28.10.81 Patentblatt 81/43**

(45) Bekanntmachung des Hinweises auf die Patenterteilung:
**10.10.84 Patentblatt 84/41**

(84) Benannte Vertragsstaaten:
**AT BE CH DE FR GB IT LI LU NL SE**

(56) Entgegenhaltungen:
**DD - A - 133 786**
**DD - A - 134 911**
**DE - A - 2 414 255**
**DE - A - 2 535 296**
**DE - A - 2 640 875**
**DE - A - 2 655 614**

**Die Akte enthält technische Angaben, die nach dem Eingang der Anmeldung eingereicht wurden und die nicht in dieser Patentschrift enthalten sind.**

(73) Patentinhaber: **Pöppinghaus, Klaus, Dr.-Ing.,**
**Heidweg 17A, D-5100 Aachen (DE)**

(72) Erfinder: **Böhnke, Botho, Prof. Dr., Maris**
**Theresien-Allee 231, D-5100 Aachen (DE)**
Erfinder: **Einbrodt, Hans Joachim, Prof. Dr.,**
**Rütscherstrasse 197, D-5100 Aachen (DE)**
Erfinder: **Pöppinghaus, Klaus, Dr.-Ing., Heidweg 17A,**
**D-5100 Aachen (DE)**
Erfinder: **Weigandt, Friedrich, Keppler Strasse 20,**
**D-4006 Erkrath-Hochdahl (DE)**

(74) Vertreter: **Patentanwaltsbüro Cohausz & Florack,**
**Postfach 14 01 47, D-4000 Düsseldorf 1 (DE)**

## Beschreibung

Die Erfindung betrifft ein Verfahren zur Gewinnung von proteinhaltigem Tierfutter aus in Wasser gelösten und/oder schwebenden organischen Stoffen, wobei die Stoffe in mindestens zwei hintereinandergeschalteten, jeweils ein belüftetes Belebungsbecken und ein Absetzbecken aufweisenden Stufen biologisch aufbereitet werden.

Aus der DE-A-2 640 875 ist ein zweistufiges Belebtschlammverfahren mit Belüftung bekannt, durch das Abwässer gereinigt werden. Dieses Belebtschlammverfahren eignet sich nicht zur Reinigung von Gülle aus landwirtschaftlichen Betrieben, da Gülle in einem zu hohen Prozentsatz mit organischen Stoffen belastet ist. Auch wurde dieses Verfahren bisher nur zur Reinigung von Abwässern verwendet.

Ferner ist es aus der DE-C-2 242 377 bekannt, den beim biologischen Abbau von Abwasser entstehenden Überschußschlamm zu entwässern und in einer dünnen Schicht kurzzeitig zu erhitzen, um die Bakterienzellen aufzuschließen.

Aufgabe der Erfindung ist es, ein Verfahren der eingangs genannten Art derart zu verbessern, daß Wasser mit hohem Anteil organischer Stoffe zur Gewinnung von proteinhaltigem Tierfutter verwendbar ist und bei einem geringen Energieaufwand und einer weitestgehenden Verwertung der zugeführten organischen Stoffe hohe Erträge leicht verdaulichen Futters erzielt werden. Auch ist es Aufgabe der Erfindung, ein Verfahren zur Verfügung zu stellen, das eine Zufuhr zusätzlichen Wassers, insbesondere gereinigten Wassers von außen nicht erfordert.

Diese Aufgaben werden erfindungsgemäß dadurch gelöst, daß in der ersten Stufe (I) ein größerer Anteil an Bakterien als Protozoen besteht, daß abwechselnd aus der ersten und zweiten Stufe (I, II) der Schlamm diskontinuierlich abgezogen, einer Entwässerungsvorrichtung zugeführt und ein Teil des entwässerten Schlamms zum Zulauf derjenigen Stufe zurückgeführt wird, der der Schlamm entnommen wurde, daß in wenigstens eines der Belebungsbecken, insbesondere in das Belebungsbecken der ersten Stufe, das Wachstum der Mikroorganismen fördernde Zusätze, insbesondere Spurenelemente und/oder Mineralien, eingebracht werden, daß dem Schlamm insbesondere nach der Entwässerung ein chemisches Mittel zugeführt wird, das die Zellwände der Mikroorganismen versprödet, anlöst und/oder auflöst.

Das erfindungsgemäße Verfahren läßt sich vorteilhaft bei mit organischen Stoffen hoch belasteten Abwässern einsetzen und erzielt bei kleiner, einfacher und preiswerter Bauweise der Anlage hohe Erträge und eine weitestgehende Verwertung der zugeführten organischen Stoffe. Das stark proteinhaltige Futter ist leicht verdaulich und kann auch in flüssigem Zustand verfüttert werden. Es ist nur ein geringer Energieaufwand erforderlich, und das Verdünnungswasser muß nicht von außen eingebracht werden, sondern beim Verfahren anfallendes Wasser wird genutzt. Hierdurch arbeitet das Verfahren besonders ökonomisch.

So läßt sich aus diesen Abwässern ein Endprodukt gewinnen, das dem Protein aus der Verhefung völlig vergleichbar ist. Die Ausbeute an Protein ist teilweise sogar noch höher.

Die Verwendung von Gülle aus landwirtschaftlichen Betrieben, insbesondere aus einer Schweinemästerei, bietet den Vorteil, daß das aus dem Überschußschlamm gewonnene Protein sofort wieder den Futtermitteln zugemischt werden kann und so ein Teil des Futtermittels, und zwar gerade der proteinreiche, wertvolle Teil, nicht gekauft werden muß, sondern an Ort und Stelle selbst produziert wird.

Gleichzeitig wird das Gülleproblem gelöst, da die Gülle in der Anlage geklärt wird und die Inhaltsstoffe das Substrat für die Mikroorganismen bilden.

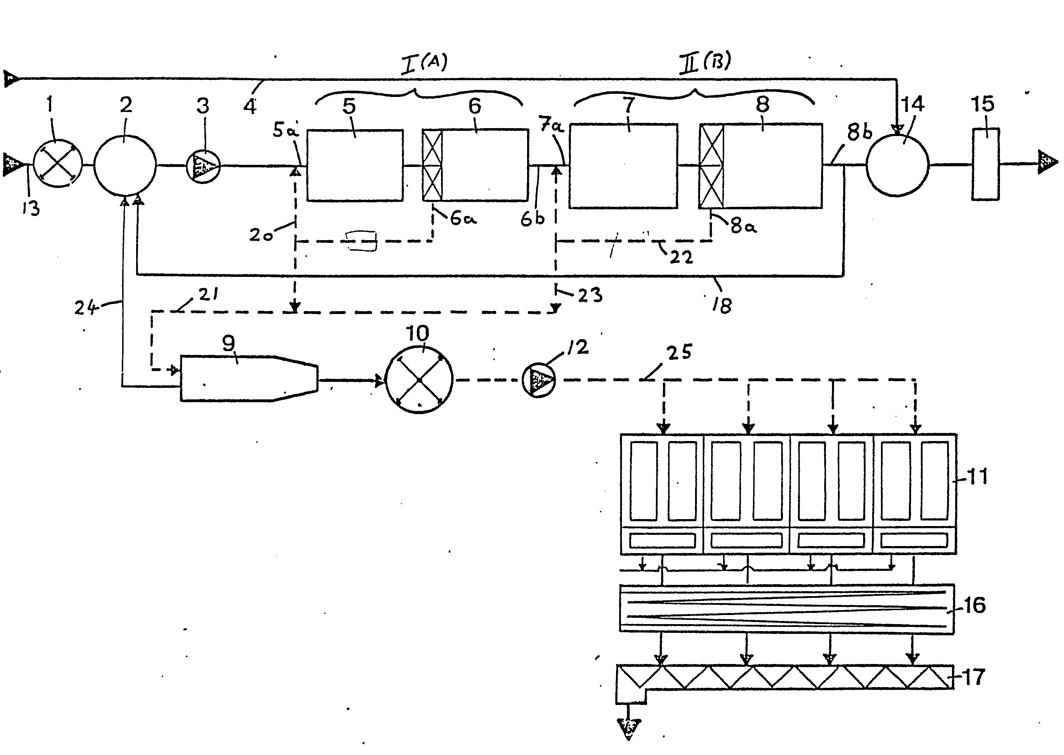

Ein Schema zur Ausübung des Verfahrens ist in der Zeichnung dargestellt und wird im folgenden näher beschrieben.

Über einen Zulauf 13 wird die ankommende Flüssigkeit, d. h. mit flüssigen oder festen organischen Stoffen hochbelastetes Wasser, insbesondere Abwässer aus der Landwirtschaft, wie Schweinegülle, einer Zerkleinerungsvorrichtung 1 zugeführt, die die im Wasser enthaltenen festen Bestandteile homogenisiert, so daß in dem Wasser auch größere Feststoffe enthalten sein können und sich ein Absetzbecken und ein Rechen oder Sieb erübrigt. Die Vorrichtung kann ein Schlagwerk aufweisen oder eine Zerförderpumpe sein und verbessert die Verarbeitung der Feststoffe durch die Bakterien, da eine erhebliche Oberflächenvergrößerung der festen Bestandteile entsteht.

Von der Zerkleinerungsvorrichtung wird das Wasser zu einem Ausgleichsbehälter 2 geführt, der die durch die Entmistung in wechselnden Mengen und Konzentration anfallenden Stoffe und Wassermenge vergleichmäßigt und durch ein Rührwerk und/oder Lüfter die absetzbaren und suspendierten Anteile der Gülle in der Schwebe hält und so ein Ablagern und Absetzen verhindert. Dieser Ausgleichsbehälter hat die Wirkung eines Zwischenspeichers und gibt das belastete Wasser in gleichmäßigen Mengen einer Pumpe 3 weiter, die die anfallenden Güllemengen anhebt und damit für die folgenden Behandlungsstufen für ein ausreichendes hydraulisches Gefälle sorgt. Gleichzeitig werden mit diesem Pumpwerk die Verdünnungswassermengen gefördert, die in den Ausgleichsbehälter über eine Leitung 18 eingebracht werden. In den Ausgleichsbehälter 2 wird zwei- bis zehnmal, insbesondere vier- bis sechsmal und vorzugsweise etwa fünfmal so viel Verdünnungswasser eingebracht, wie die durch den Zulauf 13 zugeführte Menge belasteten Wassers. Man gelangt hierdurch in den optimalen Belastungsbereich für die erste Belebungsstufe.

Von der Pumpe 3 wird das belastete Wasser über einen Zulauf 5a einem belüfteten Belebungsbecken 5 zugeführt, in dem sich sehr viele Bakterien und wenig Protozoen befinden. Die Bakterien brechen die langkettigen, schwer abbaubaren Moleküle auf, so daß im wesentlichen kürzere Molekülketten entstehen, die leichter abbaubar sind und in der zweiten Stufe von Protozoen und Bakterien aufgenommen werden können. Diese erste Stufe wird als Adsorptionsstufe mit einer sehr hohen Raumbelastung um 10 bis 15 kg $BSB_5/m^3/d$ und einer Trockensubstanz von 1,5 bis 2,0 kg $TS/m^3$ gefahren.

Bei der durch die fünffache Verdünnung bedingten $BSB_5$-Konzentration von $2 \cdot 500$ mg/l wird eine 30%ige Eliminierungsrate erreicht. Es ergibt ein Volumen von 650 $m^3$ und eine Aufenthaltszeit von 4,3 h in der ersten Stufe.

Die vorhandene Verunreinigung der Gülle wird dabei in der ersten Stufe zu stark proteinhaltigem Schlamm mit einer Gesamtmenge von rd. 2400 kg Trockensubstanz pro Tag aufgearbeitet.

Der für den Prozeß erforderliche Sauerstoffbedarf wird über eine grobblasige Belüftung mit einer spezifischen Leistung mit 31 $W/m^3$ bereitgestellt.

Eine Verbesserung der biologischen Bakterienproduktion wird erreicht durch

a) Einsatz von Mikroorganismen mit einer höheren Stoffwechselintensität,
b) durch bevorzugte Auswahl von Stoffwechselvorgängen, die auch schwer abbaubare Substanzen mit angreifen und damit eine bessere Aufbereitung der angebotenen Nahrung für die zweite Stufe aufweisen, so daß ein erhöhter Nahrungsumsatz möglich wird, um eine erhöhte Proteinproduktion zu erreichen,
c) durch eine bevorzugte Auswahl von Mikroorganismen mit größerer Unempfindlichkeit gegen pH-Stöße, Temperaturschwankungen, hohe Temperaturen und gegen Toxine.

Das in dem Belebungsbecken 5 behandelte Wasser fließt zum Absatzbecken 6, das einen Schlammabzug 6a aufweist. Ein Teil dieses Schlammes wird über eine Rücklaufleitung 20 zum Zulauf 5a des Belebungsbeckens zurückgeführt. Der andere Teil dieses Schlamms wird als Überschußschlamm über eine Leitung 21 zu einer Entwässerungsvorrichtung 9 gebracht. In der in dem Absetzbecken 6 durchgeführten Zwischenklärung wird somit der Rücklaufschlamm und der Überschußschlamm sowie der anorganische Anteil des Primärschlammes zurückgehalten. Die in die gelöste Form überführten und für die zweite Stufe aufbereiteten, gelösten Stoffe werden über einen Ablauf 6b des Absetzbeckens zum Zulauf 7a eines zweiten belüfteten Belebungsbeckens 7 geführt, in dem die dort vorhandenen Bakterien und Mikroorganismen diese aufbereiteten Stoffe während einer intensiven Schlammproduktion verarbeiten.

Die verbliebene $BSB_5$-Konzentration von rd. 1600 mg/l wird dabei um rd. 80% reduziert. Die $BSB_5$ Fracht von 6416 kg $BSB_5/d$ erfährt eine Reduktion auf rd. 1283 kg $BSB_5/d$. Dabei fällt proteinreicher Bakterienschlamm in einer Menge von 5132 kg Trockensubstanz pro Tag an. Die Raumbelastung wird zugunsten einer hohen Schlammproduktion auf 4 kg $BSB_5/m^3/d$ festgelegt. Die Belebungsstufe hat dadurch ein Gesamtvolumen von 1600 cbm und eine Aufenthaltszeit von 10,7 h.

Der hier erforderliche Sauerstoffbedarf wird durch Oberflächenbelüfter sichergestellt, die eine Leistung von 56 $W/m^3$ sichern.

Insgesamt ergibt sich einschließlich der übrigen Bedarfsquellen ein Energiebedarf von 3724 kWh/d und ein spezifischer Energiebedarf von 0,49 kWh/kg erzeugtem proteinhaltigem Bakterienschlamm bzw. 0,7 kWh/kg Futtermittel.

Diese intensivere Produktion von proteinhaltigem Überschußschlamm wird in einer darauffolgenden Nachklärung in einem zweiten Absetzbecken 8 abgeschieden. Der dort sich absetzende Schlamm wird durch eine Rücklaufleitung 22 zu einem Teil zum Zulauf 7a des Belebungsbeckens 7 zurückgeführt und durch eine abzweigende Leitung 23 in die zur Entwässerungsvorrichtung 9 führende Leitung 21 gebracht.

Das aus dem Absetzbecken 8 ablaufende Wasser wird vom Ablauf 8b in eine biologische Kläranlage 14 gebracht, in die über eine Leitung 4 auch häusliche Wässer einbringbar sind und von der Kläranlage 14 zu einer UV-Desinfektionsanlage 15, über die das Wasser in den Vorfluter gelangt. Diese häuslichen Abwässer sind in den beiden Verfahrensstufen nicht verwertbar. Der weitaus größere Teil des aus dem Absetzbecken 8 abfließenden Wassers gelangt über eine vom Ablauf 8b abzweigende Rücklaufleitung 18 als Verdünnungswasser in den Zulauf 5a, 13 zwischen der Zerkleinerungsvorrichtung 1 und der ersten Stufe (I). Das Verdünnungswasser wird vorzugsweise in den Ausgleichsbehälter 2 eingebracht.

In der zur Entwässerungsvorrichtung 9 führenden Leitung 21 kann ein nicht dargestellter Zwischenspeicher angeordnet sein, der das Wasser-Schlamm-Gemisch vergleichmäßigt, um der Vorrichtung 9 gleichmäßige Mengen zuzuführen. Der Überschußschlamm aus der ersten und zweiten Stufe wird in der Entwässerungsvorrichtung 9, die eine Zentrifuge oder eine Siebbandpresse sein kann, von 2,5% auf ca. 12% Trockensubstanz entwässert. Das in der Entwässerungsvorrichtung anfallende Wasser wird in den Ausgleichsbehälter 2 über eine Leitung 24 geführt. Von der Entwässerungsvorrichtung 9 wird der eingedickte Schlamm über eine Leitung 25 zu einem Verdampfer 11 gebracht. In der Leitung 25 befindet sich eine Zerkleinerungsvorrichtung 10, die von einem Schlagwerk oder einer Zerförderpumpe gebildet sein kann und den Schlamm homogenisiert, so daß er später in dem Verdampfer 11 in sehr dünnen Schichten aufgetragen werden kann. Eine Dosierpumpe 12 fördert den gemahlenen Schlamm in den Verdampfer 11, der vorzugsweise eine Dünnschichtverdampfer ist. Bei diesem Verdampfer werden von rotierenden Flächen die Schlammengen auf Innenwandungen von Zylindern gespritzt, auf denen sie haften, trocknen und trocken abfallen. Die Heizflächen, auf die der Schlamm in dünnen Schichten aufgetragen ist, sind durch Thermoöl oder Dampf auf ca. 120° C aufgeheizt. Durch den Kontakt mit diesen Flächen und durch die geringe Schichtdicke erfährt der Schlamm eine fast schlagartige Erhitzung. Dieser Thermoschock läßt die Zellkerne platzen und bewirkt gleichzeitig den Aufschluß des Proteins und das Abtöten der Bakterien.

Über einen Wärmetauscher 16 wird der Schlamm von einem Schneckenförderer 17 ausgetragen. Die im Wärmetauscher 16 anfallende Wärme kann den Belebungsbecken 5 und/oder 7 zugeführt werden, um das Wachstum der Mikroorganismen, insbesondere der Bakterien, zu beschleunigen. Ein Beschleunigen des Bakterienwachstums kann auch Zusatz von Spurenelementen, Mineralien und bestimmten chemischen Mitteln erfolgen. Ferner können durch chemische Mittel unerwünschte Bakterien, insbesondere toxische Stoffe erzeugende Bakterien eliminiert werden.

In den Rücklaufleitungen 20 und/oder 22 können Entwässerungsvorrichtung, insbesondere Zentrifugen oder Siebbandpressen, angeordnet sein, um den Belebungsbecken eingedickten Schlamm zurückzuführen. Diese in der Zeichnung nicht dargestellten Entwässerungsvorrichtungen können auch von der Entwässerungsvorrichtung 9 gebildet werden, indem diese Entwässerungsvorrichtung diskontinuierlich arbeitet und abwechselnd, d. h. in Reihenfolge den Schlamm in der Leitung 20, in der Leitung 22 und in der Leitung 21 behandelt. Bei einer solchen Arbeitsweise können die Rückführungsleitungen von den Absetzbecken zu den Belebungsbecken fehlen bzw. durch Leitungen ersetzt sein, die über die Entwässerungsvorrichtung 9 laufen.

Die Arbeit des Verdampfers 11 kann dadurch erleichtert werden, daß hinter der Entwässerungsvorrichtung 9 dem eingedickten Schlamm voll entsalztes Wasser zugeführt wird, damit dieses Wasser von den Mikroorganismen aufgesogen wird. Dadurch werden diese praller, so daß mit geringem Energieaufwand während der Behandlung im Verdampfer 11 (Thermolyse) die Mikroorganismen aufgebrochen und abgetötet werden. Hinter der Entwässerungsvorrichtung 9 kann auch ein chemisches Mittel zugesetzt werden, das die Zellwände der Mikroorganismen versprödet.

Weitere Einzelheiten des erfindungsgemäßen Verfahrens sind in den Ansprüchen 15 bis 25 enthalten.

**Patentansprüche**

1. Verfahren zur Gewinnung von proteinhaltigem Tierfutter aus in Wasser gelösten und/oder schwebenden organischen Stoffen, wobei die Stoffe in mindestens zwei hintereinandergeschalteten, jeweils ein belüftetes Belebungsbecken (5, 7) und ein Absetzbecken (6, 8) aufweisenden Stufen (I, II) biologisch aufbereitet werden, dadurch gekennzeichnet, daß in der ersten Stufe (I) ein größerer Anteil an Bakterien als Protozoen besteht, daß abwechselnd aus der ersten und zweiten Stufe (I, II) der Schlamm diskontinuierlich abgezogen, einer Entwässerungsvorrichtung (9) zugeführt und ein Teil des entwässerten Schlamms zum Zulauf (5a, 7a) derjenigen Stufe zurückgeführt wird, der der Schlamm entnommen wurde, das in wenigstens eines der Belebungsbecken (5, 7), insbesondere in das Belebungsbecken (5) der ersten Stufe (I), das Wachstum der Mikroorganismen fördernde Zusätze, insbesondere Spurenelemente und/oder Mineralien, eingebracht werden und daß dem Schlamm insbesondere nach der Entwässerung ein chemisches Mittel zugeführt wird, das die Zellwände der Mikroorganismen versprödet, anlöst und/oder auflöst.

2. Verfahren nach Anspruch 1, dadurch gekennzeichnet, daß das Tierfutter aus landwirtschaftlicher Gülle gewonnen wird.

3. Verfahren nach Anspruch 1 oder 2, dadurch gekennzeichnet, daß der die organischen Stoffe enthaltende Zulauf (13) mit der zwei- bis zehnfachen, insbesondere der vier- bis sechsfachen Wassermenge verdünnt wird.

4. Verfahren nach einem der Ansprüche 1 bis 3, dadurch gekennzeichnet, daß der Zulauf (13) mit etwa der fünffachen Wassermenge verdünnt wird und daß das Verdünnungswasser zwischen dem Ablauf (8b) der zweiten Stufe (II) und der Kläranlage (14) entnommen wird.

5. Verfahren nach einem der Ansprüche 1 bis 4, dadurch gekennzeichnet, daß in jeder Stufe (I, II) ein Teil der im Absetzbecken (6, 8) anfallenden Mikroorganismen und Abfallstoffe in den Zulauf (5a, 7a) derselben Stufe zurückgeführt wird und daß der restliche Teil zur Schaffung von Futter abgezweigt wird.

6. Verfahren nach Anspruch 5, dadurch gekennzeichnet, daß der restliche Ablauf (8b) der zweiten Stufe zu einer biologischen Kläranlage (14) geführt wird.

7. Verfahren nach Anspruch 6, dadurch gekennzeichnet, daß der Kläranlage (14) zusätzlich Abwässer, insbesondere häusliche Abwässer zugeführt werden, die in den beiden Stufen nicht verwertbar sind.

8. Verfahren nach Anspruch 6 oder 7, dadurch gekennzeichnet, daß das aus der Kläranlage (14) ablaufende Wasser durch eine UV-Desinfektionsanlage (15) behandelt wird.

9. Verfahren nach einem der Ansprüche 1 bis 8, dadurch gekennzeichnet, daß im Zulauf (5a, 13) zur ersten Stufe (I) die ankommende Flüssigkeit durch eine Vorrichtung (1) zerkleinert wird.

10. Verfahren nach Anspruch 9, dadurch gekennzeichnet, daß das aus dem Absetzbecken (8) abfließende Verdünnungswasser in den Zulauf (5a, 13) zwischen der Zerkleinerungsvorrichtung (1) und der ersten Stufe (I) eingebracht wird.

11. Verfahren nach einem der Ansprüche 1 bis 10, dadurch gekennzeichnet, daß für ein gleichmäßiges Beschicken im Zulauf (13) ein Ausgleichsbehälter (2) die Flüssigkeit zwischenspeichert.

12. Verfahren nach Anspruch 11, dadurch gekennzeichnet, daß das Verdünnungswasser in diesen Ausgleichsbehälter (2) geführt wird.

13. Verfahren nach Anspruch 11 oder 12, dadurch gekennzeichnet, daß der Ausgleichsbehälter (2) durch ein Rührwerk und/oder Lüfter die absetzbaren Stoffe in der Schwebe hält.

14. Verfahren nach einem der Ansprüche 5 bis 13, dadurch gekennzeichnet, daß der zur Schaffung von Futter aus wenigstens einem Absetzbecken (6, 8) abgezweigte Überschußschlamm zu einer Entwässerungsvorrichtung (9), insbesondere in eine Zentrifuge oder Siebbandpresse, geführt werden.

15. Verfahren nach einem der Ansprüche 1 bis 14, dadurch gekennzeichnet, daß der zur Schaffung von Futter aus wenigstens einem Absetzbecken (6, 8) abgezweigte Überschußschlamm in der Weise behandelt wird, daß die Zellwände der Mikroorganismen insbesondere durch kurzzeitiges Erhitzen und chemische Zusätze teilweise oder vollständig zerstört, insbesondere reißen, platzen oder an- oder aufgelöst werden.

16. Verfahren nach Anspruch 15, dadurch gekennzeichnet, daß der Schlamm zur Zerstörung der Zellwände der Mikroorganismen einem Dünnschichtverdampfer (11) zugeführt wird.

17. Verfahren nach Anspruch 15, dadurch gekennzeichnet, daß der Schlamm zur Zerstörung der Zellwände der Mikroorganismen einem Walzentrockner zugeführt wird.

18. Verfahren nach Anspruch 15, dadurch gekennzeichnet, daß der Schlamm zur Zerstörung der Zellwände der Mikroorganismen auf erhitzte flexible Flächen aufgebracht, insbesondere aufgesprüht wird, die nach der Trocknung des Schlamms so weit gebogen werden, daß die Schlammschicht abfällt.

19. Verfahren nach einem der Ansprüche 16 bis 18, dadurch gekennzeichnet, daß zwischen der Entwässerungsvorrichtung und dem Dünnschichtverdampfer (11), dem Walzentrockner oder den flexiblen Flächen eine Zerkleinerungsvorrichtung (10), insbesondere ein Homogenisator, Schlagwerk oder ein Zerförderer arbeitet.

20. Verfahren nach einem der Ansprüche 16 bis 19, dadurch gekennzeichnet, daß hinter dem Dünnschichtverdampfer (11), Walzentrockner oder den erhitzten flexiblen Flächen das Futter durch einen Wärmetauscher (16) zugeführt wird.

21. Verfahren nach einem der Ansprüche 1 bis 20, dadurch gekennzeichnet, daß in wenigstens eines der Belebungsbecken (5, 7), insbesondere in das Belebungsbecken (5) der ersten Stufe (I), chemische Zusätze eingebracht werden, die diejenigen Mikroorganismen abtöten, die toxische Substanzen ausscheiden.

22. Verfahren nach einem der Ansprüche 1 bis 21, dadurch gekennzeichnet, daß wenigstens einem der Belebtschlammbecken (5, 7) zur Förderung des Wachstums der Mikroorganismen Wärme zugeführt wird, die dem Wärmetauscher (16) entnommen wird.

23. Verfahren nach einem der Ansprüche 1 bis 22, dadurch gekennzeichnet, daß zu Beginn des Verfahrens die gewünschten Mikroorganismen in die Belebungsbecken (5, 7) eingebracht bzw. eingeimpft werden.

24. Verfahren nach einem der Ansprüche 1 bis 23, dadurch gekennzeichnet, daß während des Verfahrens mit den gewünschten Mikroorganismen nachgeimpft wird.

25. Verfahren nach einem der Ansprüche 1 bis 24, dadurch gekennzeichnet, daß zur Erhöhung der Zellwassermenge nach der Entwässerung in den Schlamm voll entsalztes Wasser eingebracht wird.

**Claims**

1. A process of producing protein-containing animal food from organic substances which are contained in solution and/or suspension in water, said substances being biologically processed in the course of at least two successive stages (I, II) each involving an aerated activation tank (5, 7) and a sedimentation tank (6, 8), characterised in that in the first stage (I) there is a higher proportion of bacteria than protozoes, that the sludge is discontinuously drawn off alternately from the first and second stages (I, II), fed to a water-extraction plant (9) and a portion of the dehydrated sludge is returned to the inflow (5a, 7a) of the respective stage from which the sludge was drawn off, that in at least one of the activation tanks (5, 7), particularly in the activation tank (5) of the first stage (I), additives, in particular trace elements and/or minerals, are introduced which enhance the growth of microorganisms and in that, particularly after dehydration of the sludge, a chemical agent is added to the latter which renders the cellular walls of the micro-oragnisms brittle, and more readily soluble and/or which dissolves the same.

2. A process according to claim 1, characterised in that the animal foodstuff is obtained from agricultural liquid manure.

3. A process according to claim 1 or 2, characterised in that the additive inflow (13) containing the organic substances is diluted with from two to ten times, notably from four to six times, the same quantity of water.

4. A process according to any of claims 1 to 3, characterised in that the additive inflow (13) is diluted with approximately five times the amount of water and in that the diluting water is extracted between the outflow (8b) from the second stage (II) and the sedimentation plant (14).

5. A process according to any of claims 1 to 4, characterised in that in each stage (I, II) a portion of the micro-organisms and waste materials produced in the sedimentation tank (6, 8) are returned to the inflow (5a, 7a) of the same stage and the remainder is branched off for food production.

6. A process according to claim 5, characterised in that the remaining outflow (8b) from the second stage is conducted through a biological purification plant (14).

7. A process according to claim 6, characterised in that other effluents, particularly domestic effluents which cannot be used in the two stages are also fed into the said purification plant (14).

8. A process according to claim 6 or 7, characterised in that the water discharged from the purification plant (14) is treated in an ultra-voilet irradiation and disinfection device (15).

9. A process according to any of claims 1 to 8, characterised in that the liquid which arrives at the intake (5a, 13) of the first stage (I) is fragmented by a fragmentation device (1).

10. A process according to claim 9, characterised in that the diluting water which is discharged from the settling tank (8) is fed into the inflow (5a, 13) between the fragmentation device (1) and the first stage (I).

11. A process according to any of claims 1 to 10, characterised in the provision of a compensation tank (2) for interim storage of the liquid to ensure an even feed rate at intake (13).

12. A process according to claim 11, characterised in that the dilution water is fed into the said compensation tank (2).

13. A process according to claim 11 or 12, characterised in that the compensation tank (2) maintains in suspension those substances which are liable to sedimentation by means of an agitator and/or aerator device.

14. A process according to any of claims 5 to 13, characterised in that the excess sludge which is branched off from at least one settling tank (6, 8) for food production is conducted to a water-extraction plant (9) in particular to a centrifuge or to a screen-belt press.

15. A process according to any of claims 1 to 14, characterised in that the excess sludge which is branched off from at least one settling tank (6, 8) for food production is treated in such a way that the cell walls of the micro-organisms are partially or completely destroyed, in particular caused to rupture, burst or partially or wholly to dissolve, particularly by brief heat application and chemical additives.

16. A process according to claim 15, characterised in that the sludge is fed into a film-evaporator (11) for the destruction of the cell walls of the micro-organisms.

17. A process according to claim 15, characterised in that the sludge is fed into a drum drier for destruction of the cell walls of the micro-organisms.

18. A process according to claim 15, characterised in that for destruction of the micro-organisms cell walls the sludge is applied, particularly by spraying, to heated flexible surfaces which after drying of the sludge are flexed sufficiently strongly to cause the sludge layer to drop off.

19. A process according to any of claims 16 to 18, characterised in that a fragmentation device (10), particularly a homogeniser, a crusher or a grinder, operates between the water-extraction unit and the film-evaporator (11), drum-dryer or flexible drying plates.

20. A process according to any of claims 16 to 19, characterised in that the foodstuff is conducted through a heat exchanger (16) arranged downstream of the film-evaporator (11) drum dryer or heated flexible drying surfaces.

21. A process according to any of claims 1 to 20, characterised in that chemical additives which kill those micro-organisms which discharge toxic substances are introduced into at least one of the activating tanks (5, 7) particularly into the activating tank (5) of the first stage (I).

22. A process according to any of claims 1 to 21, characterised in that heat from the heat exchanger (16) is fed into at least one of the activated sludge tanks (5, 7) for growth promotion in the micro-organisms.

23. A process according to any of claims 1 to 22, characterised in that the desired micro-organisms are inoculated or injected into the activating tanks (5, 7) at the start of the treatment process.

24. A process according to any of claims 1 to 23, characterised in that further inoculation with the desired micro-organisms takes place during the process.

25. A process according to any of claims 1 to 24, characterised in that fully desalinated water is introduced into the slurry after dehydration thereof for the purpose of increasing the amount of cell water.

**Revendications**

1. Procédé de préparation d'aliments pour animaux contenant des protéines à partir de substances organiques dissoutes et/ou en suspension dans l'eau, les substances étant traitées biologiquement en deux phases successives (I, II) présentant repsectivement un bassin d'activation ventilé (5, 7) et un bassin de décantation (6, 8), caractérisé par le fait que, dans la première phase (I) il existe une portion plus grande de bactéries que de protozoaires, que la boue est tirée en discontinu alternativement de la première et de la deuxième phases (I, II), est amenée à un dispositif de déshydratation (9) et une partie de la boue déshydratée est ramenée à l'entrée (5a, 7a), de la phase correspondante d'où la boue a été extraite, qu'au moins dans un des bassins d'activation (5, 7), en particulier dans le bassin d'activation (5) de la première phase (I), on amène des additifs favorisant la croissance des micro-organismes, en particulier des oligo-éléments et/ou des minéraux, et qu'on amène à la boue , en particulier après la déshydratation, un corps chimique qui fragilise, sépare et/ou dis sout les parois cellulaires des micro-organismes.

2. Procédé selon la revendication 1, caractérisé par le fait que l'aliment pour animaux est préparé à partir de lisiers d'exploitations agricoles.

3. Procédé selon l'une des revendications 1 et 2, caractérisé par le fait que l'entrée (13) qui contient les matières organiques est diluée avec deux à dix fois, de préférence quatre à six fois la même quantité d'eau.

4. Procédé selon l'une des revendications 1 à 3, caractérisé par le fait que l'entrée (13) est diluée avec environ cinq fois la même quantité d'eau et que l'eau de dilution est soutirée entre l'écoulement (8b) de la deuxième phase (II) et le dispositif de clarification (14).

5. Procédé selon l'une des revendications 1 à 4, caractérisé par le fait que, dans chaque phase (I, II), une partie des micro-organismes et des matières de déchets produits dans les bassins de décantation (6, 8) est ramenée à l'entrée (5a, 7a) de la même phase et que la partie résiduelle est séparée pour former des aliments.

6. Procédé selon la revendication 5, caractérisé par le fait que l'écoulement résiduel (8b) de la deuxième phase est conduit à un dispositif de clarification biologique (14).

7. Procédé selon la revendication 6, caractérisé par le fait qu'on envoie au dispositif de clarification des eaux additionnelles, en particulier des eaux ménagères, qui ne sont pas utiles dans les deux phases.

8. Procédé selon l'une des revendications 6 et 7, caractérisé par le fait que l'eau s'écoulant du dispositif de clarification (14) est traitée par un dispositif de désinfection UV (15).

9. Procédé selon l'une des revendications 1 à 8, caractérisé par le fait que, dans l'entrée (5a, 13) à la première phase (I), le fluide arrivant est fragmenté par un dispositif (1).

10. Procédé selon la revendication 9, caractérisé par le fait que l'eau de dilution qui s'écoule du bassin de décantation (8) est amenée dans l'entrée (5a, 13) entre le dispositif de fragmentation (1) et la première phase (I).

11. Procédé selon l'une des revendications 1 à 10, caractérisé par le fait qu'un récipient d'équilibrage (2) retient le fluide pour une alimentation homogène dans l'entrée (13).

12. Procédé selon la revendication 11, caractérisé par le fait que l'eau de dilution est conduite dans ce récipient d'équilibrage (2).

13. Procédé selon l'une des revendications 11 et 12, caractérisé par le fait que le récipient d'équilibrage (2) maintient en suspension les matières précipitables au moyen d'un agitateur et/ou d'un ventilateur.

14. Procédé selon l'une des revendications 5 à 13, caractérisé par le fait que la boue excédentaire séparée d'au moins un bassin de décantation (6, 8) est envoyée à un dispositif de déshydratation (9), en particulier une centrifugeuse ou une presse à bande perforée, pour former des aliments.

15. Procédé selon l'une des revendications 1 à 14, caractérisé par le fait que la boue excédentaire séparée d'au moins un bassin de décantation (6, 8) pour former des aliments est traitée de manière que les parois cellulaires des micro-organismes sont partiellement ou totalement détruites, en particulier déchirées, éclatées et séparées ou dissoutes, en particulier par chauffage court et additifs chimiques.

16. Procédé selon la revendication 15, caractérisé par le fait que, pour détruire les parois cellulaires des micro-organismes, la boue est envoyée à un évaporator à couche mince (11).

17. Procédé selon la revendication 15, caractérisé par le fait que, pour détruire les parois cellulaires des micro-organismes, la boue est envoyée à un sécheur à tambour.

18. Procédé selon la revendication 15, caractérisé par le fait que, pour détruire les parois cellulaires des micro-organismes, la boue est répandue, en particulier pulvérisée, sur des surfaces flexibles chauffées qui sont courbées après le séchage de la boue jusqu'à ce que la couche de boue tombe.

19. Procédé selon l'une des revendications 16 à 18, caractérisé par le fait qu'un dispositif de fragmentation (10), en particulier un homogénéisateur, un dispositif de frappe ou un broyeur travaille entre le dispositif de déshydratation et l'évaporateur à couche mince (11), le sécheur à tambour ou les surfaces flexibles.

20. Procédé selon l'une des revendications 16 à 19, caractérisé par le fait que l'aliment est conduit à travers un échangeur de chaleur (16) après l'évaporateur à couche mince (11), le sécheur à tambour ou les surfaces flexibles chauffées.

21. Procédé selon l'une des revendications 1 à 20, caractérisé par le fait qu'on introduit au moins dans l'un des bassins d'activation (5, 7), en particulier le bassin d'activation (5) de la première phase, des additifs chimiques qui tuent les micro-organismes qui séparent des substances toxiques.

22. Procédé selon l'une des revendications 1 à 21, caractérisé par le fait que de la chaleur extraite de l'échangeur de chaleur (16) est envoyée au moins à l'un des bassins d'activation de la boue (5, 7) pour accélérer la croissance des micro-organismes.

23. Procédé selon l'une des revendications 1 à 22, caractérisé par le fait que, au début du processus, on introduit ou on inocule les micro-organismes souhaités dans les bassins d'activation (5, 7).

24. Procédé selon l'une des revendications 1 à 23, caractérisé par le fait que les micro-organismes souhaités sont inoculés au cours du processus.

25. Procédé selon l'une des revendications 1 à 24, caractérisé par le fait qu'on introduit de l'eau complètement dessalée dans la boue après la deshydratation pour augmenter la quantité d'eau cellulaire.